# EUROPÄISCHE PATENTSCHRIFT

(11) **EP 4 377 888 B1**
(45) Veröffentlichungstag und Bekanntmachung des Hinweises auf die Patenterteilung: **22.04.2026**
(21) Anmeldenummer: 22735088.1
(22) Anmeldetag: 08.06.2022
(51) Int. Cl.: G06T 7/13

(54) **SEGMENTIEREN VON TRAJEKTORIENDATEN**
SEGMENTATION OF TRAJECTORY DATA
SEGMENTATION DES DONNÉES DE TRAJECTOIRE

(30) Priorität: 26.07.2021 DE 102021208001
(43) Veröffentlichungstag der Anmeldung: 05.06.2024
(73) Patentinhaber: Robert Bosch GmbH, 70442 Stuttgart (DE)
(72) Erfinder: GAO, Ming, 31177 Harsum (DE); ROETH, Oliver, 31008 Elze (DE); SCHMITT, Andreas, 30173 Hannover (DE)
(86) Internationale Anmeldenummer: PCT/EP2022/065457
(87) Internationale Veröffentlichungsnummer: WO 2023/006284

(56) Entgegenhaltungen:
- EP-A1- 3 385 673
- DE-A1- 102004 023 399
- US-A1- 2019 086 925
- PRITHVIRAJ BANERJEE ET AL: "Dynamics Based Trajectory Segmentation for UAV videos", ADVANCED VIDEO AND SIGNAL BASED SURVEILLANCE (AVSS), 2010 SEVENTH IEEE INTERNATIONAL CONFERENCE ON, IEEE, PISCATAWAY, NJ, USA, 29 August 2010 (2010-08-29), pages 345 - 352, XP031772045, ISBN: 978-1-4244-8310-5
- LAASS MORITZ ET AL: "Improving persistence based trajectory simplification", 2021 22ND IEEE INTERNATIONAL CONFERENCE ON MOBILE DATA MANAGEMENT (MDM), IEEE, 15 June 2021 (2021-06-15), pages 157 - 162, XP033938584, DOI: 10.1109/MDM52706.2021.00033
- LIN KUNHUI ET AL: "Noise filtering, trajectory compression and trajectory segmentation on GPS data", 2016 11TH INTERNATIONAL CONFERENCE ON COMPUTER SCIENCE & EDUCATION (ICCSE), IEEE, 23 August 2016 (2016-08-23), pages 490 - 495, XP032975301, DOI: 10.1109/ICCSE.2016.7581629

## Beschreibung

Die Erfindung betrifft ein Verfahren zum Segmentieren von Trajektoriendaten. Des Weiteren betrifft die Erfindung ein Steuergerät, ein Computerprogramm sowie ein maschinenlesbares Speichermedium.

### Stand der Technik

Das Dokument "Dynamics Based Trajectory Segmentation for UAV videos" von Banerjee et al. (Advanced Video and Signal-Based Surveillance (AVSS), 2010, 7th International Conference on, IEEE, Piscataway, NJ, USA, 29. August 2010, Seiten 345-352, XP031772045) offenbart eine bestimmte Darstellung von Fahrzeugtrajektorien für Anwendungen in der Trajektorienanalyse und Aktivitätserkennung.

Das Dokument "Improving persistence based trajectory simplification" von Laass et al. (2021 22nd IEEE International Conference on Mobile Data Management (MOM), IEEE, 15. Juni 2021, Seiten 157-162, XP033938584) offenbart ein Online-Algorithmus zur Vereinfachung von räumlichen Trajektorien in linearer Zeit.

Das Dokument "Noise filtering, trajectory compression and trajectory segmentation on GPS data" von Lin et al. (2016 11th Internation Conference on Computer Science & Education (ICCSE), IEEE, 23. August 2016, Seiten 490-495, XP032975301) offenbart eine verbesserte Methode zur Rauschfilterung, Trajektorienkompression und Trajektorensegmentierung, die auf dem Kalman-Filter und dem Douglas-Peucker-Algorithmus basiert.

Die US 2019/086925 A1 offenbart ein Computer-implementiertes Verfahren zur Optimierung einer Bahn Trajektorie für ein autonom fahrendes Fahrzeug.

Eine Trajektorie bezieht sich auf eine Folge von zeitgestempelten Positionen, die in einem bestimmten Koordinatensystem aufgezeichnet werden. Ein Beispiel dafür ist eine Fahrzeugtrajektorie, die mit sequenziellen geografischen Koordinaten GNSS-basiert aufgezeichnet wird. Die Segmentierung von Trajektorien zielt darauf ab, gegebene Trajektorien in Teile bzw. Blöcke aufzuspalten, die konsistente geometrische Eigenschaften, wie beispielsweise Richtung und Linearität, aufweisen. Die Segmentierung wird in unterschiedlichen Bereichen angewandt, wie beispielsweise bei der Erstellung von Planungskarten mit Crowd-Sourced Trajektoriendaten, bei denen die Trajektoriensegmentierung eine Skalierung über eine beliebige Flächengröße ermöglicht.

Üblicherweise konzentriert sich die Segmentierung von Trajektorien auf das Auffinden von Trajektorienpunkten bzw. Positionen, deren geometrische Eigenschaften im Vergleich zu ihren Nachbarpunkten inkonsistent werden, dann werden diese Punkte als Segmentierungspunkte registriert. Die Segmentierungspunkte bilden eine Grenze zwischen zwei Segmentierungen oder Blöcken. Es sind bereits Verfahren zum Segmentieren von Trajektorien bekannt. Beispielsweise können Trajektorien in Segmente mit einer gleichen Länge aufgeteilt bzw. segmentiert werden. Des Weiteren kann eine Linearität der gegebenen Trajektorien ausgenutzt werden, um die minimale Anzahl von Segmentierungspunkten zu ermitteln.

Problematisch an den bekannten Verfahren ist jedoch, dass oftmals Segmentierungspunkte innerhalb von Kurven festgelegt oder gerade Trajektorienabschnitte in eine zu hohe Vielzahl von Segmenten unterteilt werden.

### Offenbarung der Erfindung

Die der Erfindung zugrunde liegende Aufgabe kann darin gesehen werden, ein Verfahren zum Unterteilen von Trajektoriendaten in Segmente vorzuschlagen, durch welches das Segmentieren von Kurvenabschnitte vermieden wird.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zum Segmentieren von Trajektoriendaten, insbesondere durch ein Steuergerät, bereitgestellt. In einem Schritt werden Trajektoriendaten mit einer Vielzahl an Punkten empfangen. Die Punkte können Positionspunkte sein, die jeweils einen Zeitstempel aufweisen.

Zum Ermitteln von im Wesentlichen geraden, durch Segmentierungspunkte getrennten, Abschnitten wird auf die Trajektoriendaten ein Algorithmus zur Kurvenglättung und/oder zur Generalisierung, wie beispielsweise ein Douglas-Peucker-Algorithmus, angewandt. Hierdurch wird eine Form bzw. ein geografischer Verlauf der Trajektoriendaten vereinfacht, sodass Segmentierungspunkte zum Aufteilen der Trajektoriendaten in Kurvenabschnitten gebildet werden.

In einem weiteren Schritt wird ein Algorithmus zum Detektieren von Kurven, insbesondere in Form von Startpunkten und Endpunkten von Kurven, auf die Trajektoriendaten angewandt. Durch einen derartigen Algorithmus werden Kurvenabschnitte und eine Länge der Kurvenabschnitte detektiert.

Mindestens ein in einem Intervall zwischen einem Startpunkt und einem Endpunkt einer Kurve ermittelter Segmentierungspunkt wird durch den Startpunkt und den Endpunkt ersetzt. Somit wird ein Segmentieren von Trajektoriendaten innerhalb von Kurvenabschnitten verhindert. Derartige Segmentierungspunkte innerhalb eines Kurvenabschnitts werden somit gelöscht und durch jeweils einen Startpunkt des Kurvenabschnitts und einen Endpunkt des Kurvenabschnitts ersetzt.

Die Trajektoriendaten werden an den ermittelten Segmentierungspunkten, den Startpunkten und den Endpunkten segmentiert.

Durch das Verfahren werden Algorithmen zur Kurvenglättung und/oder Generalisierung mit Algorithmen zur Detektion von Kurven bzw. Kurvenabschnitten kombiniert. Dabei können die Ergebnisse der jeweiligen Algorithmen miteinander fusioniert werden, um ein Ausbilden von Segmentierungspunkten innerhalb von Kurvenabschnitten und innerhalb von geraden Abschnitten der Trajektoriendaten zu vermeiden. Insbesondere kann durch den Algorithmus zum Detektieren von Kurven verhindert werden, dass eine Kurve in ihrer Mitte segmentiert wird, indem die Konsistenz der Kursänderungen der Trajektoriendaten berücksichtigt wird.

Das erfindungsgemäße Verfahren wird auf jeden Satz an Trajektoriendaten separat angewandt und kann somit parallel mehrere Sätze an Trajektoriendaten gleichzeitig verarbeiten. Ein Satz an Trajektoriendaten kann hierbei eine Gruppe an Messdaten eines Fahrzeugs, eine Gruppe an Messdaten von einem geografischen Gebiet, eine vordefinierte Anzahl an Messdaten und dergleichen sein.

Nach einem weiteren Aspekt der Erfindung wird ein Steuergerät bereitgestellt, wobei das Steuergerät dazu eingerichtet ist, das Verfahren auszuführen. Das Steuergerät kann beispielsweise ein fahrzeugseitiges Steuergerät, ein fahrzeugexternes Steuergerät oder eine fahrzeugexterne Servereinheit, wie beispielsweise ein Cloud-System, sein. Das Steuergerät kann vorzugsweise die Trajektoriendaten empfangen und verarbeiten. Hierzu kann das Steuergerät einen internen oder externen Speicher aufweisen, um die Trajektoriendaten und die Ergebnisse des Verfahrens temporär oder dauerhaft speichern zu können.

Des Weiteren kann das Steuergerät eine integrierte Kommunikationseinheit oder eine externe Kommunikationseinheit aufweisen, um die Trajektoriendaten zu empfangen und die Segmentierten Trajektoriendaten als ein mögliches Ergebnis des Verfahrens zu versenden.

Darüber hinaus wird nach einem Aspekt der Erfindung ein Computerprogramm bereitgestellt, welches Befehle umfasst, die bei der Ausführung des Computerprogramms durch einen Computer oder ein Steuergerät diesen veranlassen, das erfindungsgemäße Verfahren auszuführen. Gemäß einem weiteren Aspekt der Erfindung wird ein maschinenlesbares Speichermedium bereitgestellt, auf dem das erfindungsgemäße Computerprogramm gespeichert ist.

Bei einer Ausführungsform werden durch den Algorithmus zum Detektieren von Kurven für jeden Punkt eine Kursrichtung und anschließend eine Differenz der Kursrichtung zwischen jeweils zwei aufeinander folgenden Punkten ermittelt. Ein Punkt der Trajektoriendaten wird zu einer Kurve oder einem Kurvenabschnitt zugeordnet, wenn die Differenz der Kursrichtung zwischen dem Punkt und dem folgenden Punkt einen vordefinierten Schwellwert übersteigt. Hierdurch kann technisch einfach eine Erkennung von Kurvenabschnitten realisiert werden. Die Punkte der Trajektoriendaten auf geraden Abschnitten werden als Punkte mit relativen Kursrichtungen unterhalb des Schwellwerts herausgefiltert.

Nach einer weiteren Ausführungsform wird die Kursrichtung in Form eines Vektors zwischen einem ersten Punkt und einem darauffolgenden zweiten Punkt mit einem Gierwinkel ermittelt. Dies entspricht bei Trajektoriendaten von Fahrzeugen einer Fahrtrichtung des Fahrzeugs ausgehend von dem ersten Punkt in Richtung des zweiten Punkts. Der Gierwinkel kann gegenüber einer vordefinierten Himmelsrichtung oder einer Referenzrichtung ermittelt werden.

Gemäß einem weiteren Ausführungsbeispiel wird die Differenz der Kursrichtung durch einen Abstand zwischen dem ersten Punkt und dem zweiten Punkt genormt. Durch diese Maßnahme können eine zusätzliche Kurvenglättung und eine Vergleichbarkeit der ermittelten Kursrichtungen der unterschiedlichen Punkte ermöglicht werden.

Nach einer weiteren Ausführungsform werden den Punkten, die den vordefinierten Schwellwert übersteigen, benachbarte Punkte, die den Schwellwert nicht übersteigen, als Startpunkte oder Endpunkte einer Kurve definiert und als Segmentierungspunkte zum Aufteilen der Trajektoriendaten in Abschnitte verwendet. Somit können ein eindeutiger Starpunkt und ein eindeutiger Endpunkt einer Kurve bzw. eines Kurvenabschnitts ermittelt werden. Sobald zwischen zwei benachbarten Punkten der Trajektoriendaten keine oder nur geringe Unterschiede hinsichtlich der Kursrichtung vorliegen werden diese den Schwellwert nicht übersteigen und werden durch das Verfahren zu einem geraden Abschnitt und nicht mehr zu einem Kurvenabschnitt zugeordnet.

Gemäß einem weiteren Ausführungsbeispiel werden die an den ermittelten Segmentierungspunkten, den Startpunkten und den Endpunkten segmentierten Trajektoriendaten zumindest segmentweise empfangen und zum Steuern eines Fahrzeugs verwendet. Die Trajektoriendaten können dabei Segment für Segment empfangen und für eine Fahrzeugsteuerung eingesetzt werden. Dabei können auch mehrere Segmente gleichzeitig empfangen werden, um beispielsweise eine geplante Trajektorie oder einen Teil der geplanten Trajektorie abzubilden.

Im Folgenden werden anhand von stark vereinfachten schematischen Darstellungen bevorzugte Ausführungsbeispiele der Erfindung näher erläutert. Hierbei zeigen
- Fig. 1: eine Darstellung von segmentierten Trajektoriendaten gemäß dem Stand der Technik,
- Fig. 2-4: schematische Draufsichten zum Veranschaulichen eines erfindungsgemäßen Verfahrens gemäß einer Ausführungsform und
- Fig. 5: schematische Draufsichten zum Verdeutlichen eines Algorithmus zum Detektieren von Kurven.

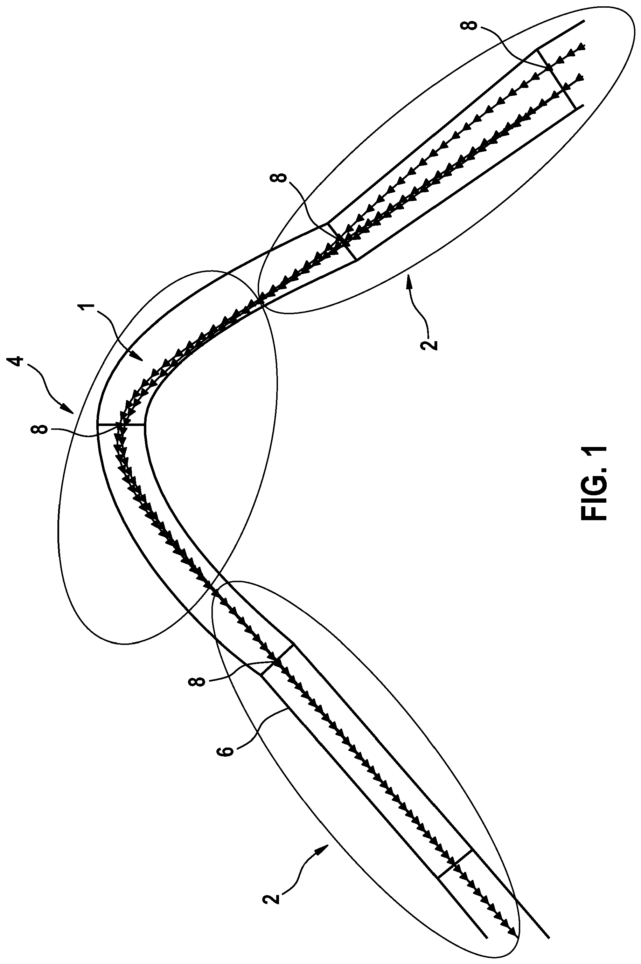

In der Figur 1 ist eine Darstellung von segmentierten Trajektoriendaten gemäß dem Stand der Technik gezeigt. Dabei sind die geraden Abschnitte 2 und die Kurvenabschnitte 4 der Trajektoriendaten 1 in unterschiedliche Segmente 6 unterteilt. Die Trajektoriendaten 1 können anschließend in Form von Segmenten 6 weiterverarbeitet oder nicht gezeigten Verkehrsteilnehmern zur Verfügung gestellt.

Zum Unterteilen der Trajektoriendaten 1 müssen Segmentierungspunkte 8 detektiert werden, an welchen Grenzen zwischen zwei Segmenten 6 gezogen werden. Wie in der Figur 1 zu sehen, erfolgt die Segmentierung der Trajektoriendaten 1 in gleichmäßigen länglichen Segmenten 6, die auch innerhalb von Kurvenabschnitten 4 Grenzen aufweisen. Nutzt ein Verkehrsteilnehmer derartig segmentierte Trajektoriendaten 1 können Verzögerungen bei der Verarbeitung entstehen. Dies kann sich in komplizierten Verkehrssituationen, wie in den Kurven, nachteilig auf die Verkehrssicherheit auswirken. Des Weiteren werden die geraden Abschnitte 2 unnötig in eine Vielzahl von Segmenten 6 aufgeteilt.

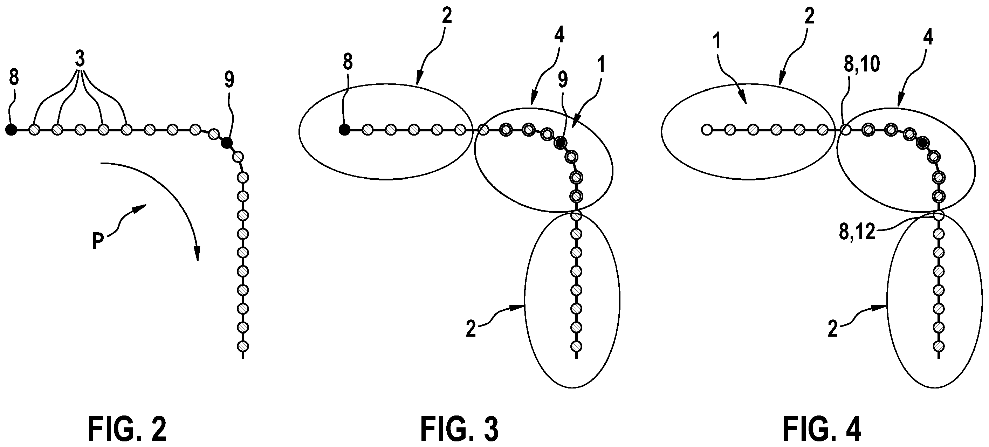

In den Figuren 2 bis 4 sind schematische Draufsichten zum Veranschaulichen eines erfindungsgemäßen Verfahrens gemäß einer Ausführungsform illustriert. Dabei ist in der Figur 2 eine Bewegungsrichtung durch einen Pfeil P verdeutlicht, entlang welcher die Trajektoriendaten 1 ermittelt wurden und entlang welcher die Verarbeitung der Trajektoriendaten1 durch das Verfahren erfolgt. Das Verfahren kann durch ein nicht dargestelltes Steuergerät ausgeführt werden, welches fahrzeugintern oder fahrzeugextern ausgestaltet sein kann.

In einem ersten Schritt werden die Trajektoriendaten 1 mit einer Vielzahl an Punkten 3 empfangen. Hierzu ist in den Figuren 2 bis 4 eine Detailansicht gezeigt, die nur eine Trajektorie zeigt. Die Trajektoriendaten 1 können jedoch auch aus einer Vielzahl von Trajektorien zusammengesetzt sein und eine Vielzahl von auch sich überlagernden Punkten 3 aufweisen.

Zum Ermitteln von im Wesentlichen geraden, durch Segmentierungspunkte 8, 9 getrennten, Abschnitten wird ein Algorithmus zur Kurvenglättung und/oder Generalisierung, wie beispielsweise ein Douglas-Peucker-Algorithmus, auf die Trajektoriendaten 1 angewandt. Das entsprechende Ergebnis ist in der Figur 2 dargestellt. Es sind beispielhaft zwei Segmentierungspunkte 8, 9 gezeigt.

In einem zweiten Schritt, welcher in der Figur 3 verdeutlicht ist, wird ein Algorithmus zum Detektieren von Kurven bzw. Kurvenabschnitten 4, insbesondere in Form von Startpunkten 10 und Endpunkten 12 von Kurvenabschnitten 4, auf die Trajektoriendaten 1 angewandt.

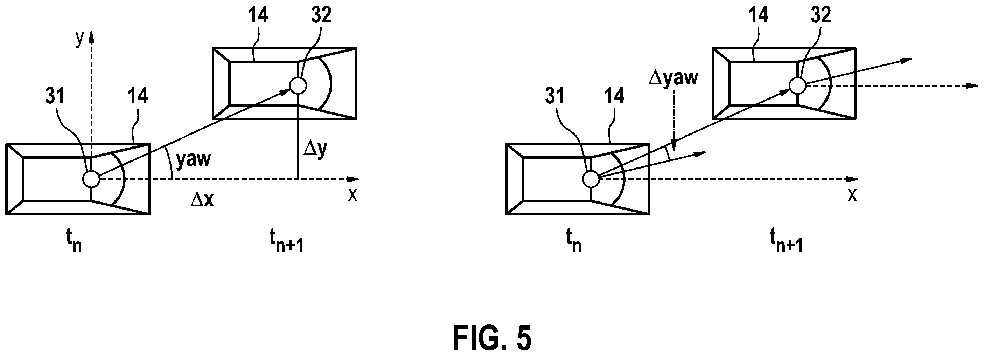

Durch den Algorithmus zum Detektieren von Kurvenabschnitten 4 wird für jeden Punkt 3 eine Kursrichtung und anschließend eine Differenz der Kursrichtung zwischen jeweils zwei aufeinander folgenden Punkten ermittelt. Ein Punkt 3 der Trajektoriendaten 1 wird zu einer Kurve bzw. zu einem Kurvenabschnitt 4 zugeordnet, wenn die Differenz der Kursrichtung zwischen dem Punkt 31 und dem folgenden Punkt 32 einen vordefinierten Schwellwert übersteigt. Dies wird in der Figur 5 näher erläutert.

In einem weiteren Schritt des Verfahrens wird mindestens ein in einem Intervall zwischen einem Startpunkt 10 und einem Endpunkt 12 eines Kurvenabschnitts 4 ermittelter Segmentierungspunkt 8, 9 durch den Startpunkt 10 und den Endpunkt 12 ersetzt. Dabei wird der entsprechende Segmentierungspunkt 9 gelöscht oder zumindest nicht mehr als ein Segmentierungspunkt 9 verwendet.

Anschließend werden die Trajektoriendaten 1 an den ermittelten Segmentierungspunkten 8, den Startpunkten 10 und den Endpunkten 12 zu Segmenten 6 segmentiert.

Die Figur 5 zeigt schematische Draufsichten zum Verdeutlichen eines Algorithmus zum Detektieren von Kurvenabschnitten 4. Dabei wird an einem ersten Punkt 31 mit einem ersten Zeitstempel tₙ eine Kursrichtung in Form eines Gierwinkels yaw ermittelt. Der zweite Punkt 32 weist einen zweiten Zeitstempel tₙ₊₁ auf.

Die Trajektoriendaten 1 werden beispielhaft durch ein Fahrzeug 14 ermittelt, welches eine Route befährt. Dabei werden die unterschiedlichen Punkte 31, 32 zu unterschiedlichen Zeitpunkten t befahren und mit entsprechenden Zeitstempeln versehen.

Im dargestellten Ausführungsbeispiel erfolgt die Messung des Gierwinkels yaw gegenüber einer Horizontalachse x, die beispielsweise eine Ost-West-Verbindungslinie sein kann. Dabei kann der Gierwinkel yaw im gezeigten Ausführungsbeispiel durch den Arkustangens eines Quotienten aus einem Vertikalversatz Δy und einem Horizontalversatz Δx zu einem darauffolgenden zweiten Punkt 32 berechnet werden.

Die Gierwinkel yaw werden für jeden Punkt 3 mit einem nachfolgenden Punkt berechnet. In einem weiteren Schritt werden relative Kursänderungen Δyaw zwischen den jeweiligen Punkten 3 berechnet. Dies wird durch Ausbilden einer Differenz zwischen den jeweiligen Gierwinkel yaw umgesetzt.

Die relative Kursänderungen Δyaw jedes Trajektorienpunktes 3 kann darüber hinaus mit den Werten derjeniger Punkte 3 akkumuliert werden, die sich innerhalb eines vordefinierten Abstandsparameters befinden. Der akkumulierte Winkelwert jedes Trajektorienpunkts kann zusätzlich mit einer vorgegebenen Mittelungsbreite geglättet werden. Durch diese beiden Schritte können Punkte 3 hervorgehoben werden, die eine kontinuierliche Kursänderung aufweisen, während Punkte 3 der Trajektoriendaten 1 unterdrückt werden, die eine relativ konstante Bewegungsrichtung haben, wie beispielsweise auf geraden Abschnitten 2. Durch Markieren der Punkte, deren geglättete relative Kursrichtungen bzw. Kursänderungen Δyaw einen bestimmten Winkelschwellwert überschreiten, können Kurven in der gegebenen Trajektorie erkannt werden.

## Patentansprüche

1. Verfahren zum Segmentieren von Trajektoriendaten (1), insbesondere durch ein Steuergerät, wobei
- Trajektoriendaten (1) mit einer Vielzahl von Punkten (3) empfangen werden,
- zum Ermitteln von im Wesentlichen geraden, durch Segmentierungspunkte (8, 9) getrennten, Abschnitten (2) ein Algorithmus zur Kurvenglättung und/oder Generalisierung, wie beispielsweise ein Douglas-Peucker-Algorithmus, auf die Trajektoriendaten (1) angewandt wird,
- ein Algorithmus zum Detektieren von Kurven (4), insbesondere in Form von Startpunkten (10) und Endpunkten (12) von Kurven (4), auf die Trajektoriendaten (1) angewandt wird,
- mindestens ein in einem Intervall zwischen einem Startpunkt (10) und einem Endpunkt (12) einer Kurve (4) ermittelter Segmentierungspunkt (9) durch den Startpunkt (10) und den Endpunkt (12) ersetzt wird, wobei die Trajektoriendaten (1) an den ermittelten Segmentierungspunkten (8), den Startpunkten (10) und den Endpunkten (12) segmentiert werden,
wobei durch den Algorithmus zum Detektieren von Kurven (4) für jeden Punkt (3) eine Kursrichtung und anschließend eine Differenz der Kursrichtung zwischen jeweils zwei aufeinander folgenden Punkten (31, 32) ermittelt wird, wobei ein Punkt (3) der Trajektoriendaten (1) zu einer Kurve (4) zugeordnet wird, wenn die Differenz der Kursrichtung zwischen dem Punkt (31) und dem folgenden Punkt (32) einen vordefinierten Schwellwert übersteigt,
**dadurch gekennzeichnet, dass**
die Differenz der Kursrichtung durch einen Abstand zwischen dem ersten Punkt (31) und dem zweiten Punkt (32) genormt wird.

2. Verfahren nach Anspruch 1, wobei die Kursrichtung in Form eines Vektors zwischen einem ersten Punkt (31) und einem darauffolgenden zweiten Punkt (32) mit einem Gierwinkel (yaw) ermittelt wird.

3. Verfahren nach einem der Ansprüche 1 oder 2, wobei den Punkten (3) der Trajektoriendaten (1), die den vordefinierten Schwellwert übersteigen, benachbarte Punkte (3), die den Schwellwert nicht übersteigen, als Startpunkte (10) oder Endpunkte (12) einer Kurve (4) definiert und als Segmentierungspunkte (8) zum Aufteilen der Trajektoriendaten (1) in Segmente (6) verwendet werden.

4. Verfahren nach einem der Ansprüche 1 bis 3, wobei die an den ermittelten Segmentierungspunkten (8), den Startpunkten (10) und den Endpunkten (12) segmentierten Trajektoriendaten (1) zumindest segmentweise empfangen und zum Steuern eines Fahrzeugs (14) verwendet werden.

5. Steuergerät, wobei das Steuergerät dazu eingerichtet ist, das Verfahren gemäß einem der Ansprüche 1 bis 4 auszuführen.

6. Computerprogramm, welches Befehle umfasst, die bei der Ausführung des Computerprogramms durch einen Computer oder ein Steuergerät diesen veranlassen, das Verfahren gemäß einem der Ansprüche 1 bis 4 auszuführen.

7. Maschinenlesbares Speichermedium, auf welchem das Computerprogramm gemäß Anspruch 6 gespeichert ist.

## Claims

1. Method for segmenting trajectory data (1), in particular by means of a control unit, wherein
- trajectory data (1) comprising a multiplicity of points (3) are received,
- a curve smoothing and/or generalization algorithm, for example a Douglas-Peucker algorithm, is applied to the trajectory data (1) to determine substantially straight sections (2) separated by segmentation points (8, 9),
- an algorithm for detecting curves (4), in particular in the form of starting points (10) and end points (12) of curves (4), is applied to the trajectory data (1),
- at least one segmentation point (9) determined in an interval between a starting point (10) and an end point (12) of a curve (4) is replaced by the starting point (10) and the end point (12), the trajectory data (1) being segmented at the determined segmentation points (8), the starting points (10) and the end points (12),
the algorithm for detecting curves (4) being used to determine a path direction for each point (3) and then a difference in the path direction between two particular consecutive points (31, 32), a point (3) in the trajectory data (1) being assigned to a curve (4) if the difference in the path direction between the point (31) and the next point (32) exceeds a predefined threshold value,
**characterized in that**
the difference in the path direction is standardized by a distance between the first point (31) and the second point (32).

2. Method according to Claim 1, wherein the path direction is determined in the form of a vector between a first point (31) and a subsequent second point (32) comprising a yaw angle (yaw).

3. Method according to either of Claims 1 and 2, wherein points (3) in the trajectory data (1) that do not exceed the predefined threshold value and are adjacent to the points (3) that do exceed the threshold value are defined as the starting points (10) or end points (12) of a curve (4) and used as segmentation points (8) for splitting the trajectory data (1) into segments (6).

4. Method according to one of Claims 1 to 3, wherein the trajectory data (1) segmented at the determined segmentation points (8), the starting points (10) and the end points (12) are received at least segment by segment and used for controlling a vehicle (14).

5. Control unit, the control unit being designed to carry out the method according to one of Claims 1 to 4.

6. Computer program comprising instructions that, when the computer program is executed by a computer or a control unit, cause same to carry out the method according to one of Claims 1 to 4.

7. Machine-readable storage medium on which the computer program according to Claim 6 is stored.

## Revendications

1. Procédé de segmentation des données de trajectoire (1), en particulier par un appareil de commande, dans lequel
- des données de trajectoire (1) comprenant une pluralité de points (3) sont reçues,
- pour déterminer des sections (2) sensiblement rectilignes, séparées par des points de segmentation (8, 9), un algorithme de lissage de courbes et/ou de généralisation, tel qu'un algorithme de Douglas- Peucker, est appliqué aux données de trajectoire (1),
- un algorithme de détection de courbes (4), notamment sous forme de points de départ (10) et de points d'extrémité (12) de courbes (4), est appliqué aux données de trajectoire (1),
- au moins un point de segmentation (9) déterminé dans un intervalle entre un point de départ (10) et un point d'extrémité (12) d'une courbe (4) est remplacé par le point de départ (10) et par le point d'extrémité (12), les données de trajectoire (1) étant segmentées au niveau des points de segmentation (8) déterminés, des points de départ (10) et des points d'extrémité (12),
dans lequel l'algorithme de détection de courbes (4) détermine un cap pour chaque point (3), puis une différence de cap entre deux points consécutifs (31, 32) respectifs est déterminée, un point (3) des données de trajectoire (1) étant attribué à une courbe (4) lorsque la différence de cap entre le point (31) et le point (32) suivant dépasse une valeur de seuil prédéfinie,
**caractérisé en ce que**
la différence de cap est normalisée par rapport à une distance entre le premier point (31) et le deuxième point (32).

2. Procédé selon la revendication 1, dans lequel le cap est déterminé sous la forme d'un vecteur entre un premier point (31) et un deuxième point (32) suivant avec un angle de lacet (yaw).

3. Procédé selon l'une quelconque des revendications 1 ou 2, dans lequel les points (3) des données de trajectoire (1) qui sont adjacents aux points (3) dépassant la valeur de seuil prédéfinie, mais ne dépassant pas eux-mêmes la valeur de seuil, sont définis comme points de départ (10) ou points d'extrémité (12) d'une courbe (4), et sont utilisés comme points de segmentation (8) pour diviser les données de trajectoire (1) en segments (6).

4. Procédé selon l'une quelconque des revendications 1 à 3, dans lequel les données de trajectoire (1) segmentées au niveau des points de segmentation (8), des points de départ (10) et des points d'extrémité (12) sont reçues au moins segment par et segment et utilisées pour commander un véhicule (14).

5. Appareil de commande, l'appareil de commande étant conçu pour mettre en œuvre le procédé selon l'une quelconque des revendications 1 à 4.

6. Programme informatique comprenant des instructions qui, lorsque le programme informatique est exécuté par un ordinateur ou un appareil de commande, font que celui-ci met en œuvre le procédé selon l'une quelconque des revendications 1 à 4.

7. Support de stockage lisible par machine sur lequel est stocké le programme informatique selon la revendication 6.
